# EUROPEAN PATENT SPECIFICATION

(11) **EP 4 214 944 B1**
(45) Date of publication and mention of the grant of the patent: **05.11.2025**
(21) Application number: 21867980.1
(22) Date of filing: 14.09.2021
(51) Int. Cl.: H04W 12/128, H04W 12/102, H04L 61/4511, H04L 9/40, H04W 12/086, H04W 12/088, H04W 12/60, H04W 12/67

(54) **ROAMING DNS FIREWALL**
ROAMING-DNS-FIREWALL
PARE-FEU D'ITINÉRANCE DE DNS

(30) Priority: 15.09.2020 US 202063078848 P
(43) Date of publication of application: 26.07.2023
(73) Proprietor: Field Effect Software Inc., Ottawa ON K1S 5J3 (CA)
(72) Inventor: HOLLAND, Matthew, Ottawa, Ontario K1S 5J3 (CA)
(74) Representative: Oancea, Andreas Christian
(86) International application number: PCT/CA2021/051277
(87) International publication number: WO 2022/056626

(56) References cited:
- WO-A1-2015/051720
- CN-A- 103 269 389
- CN-A- 103 634 786
- CN-A- 103 634 786
- CN-A- 106 878 254
- CN-A- 108 111 516
- US-A1- 2011 191 455

## Description

### RELATED APPLICATION

This application claims priority to US Provisional Patent Application Serial No. 63/078,848, filed September 15, 2020.

### TECHNICAL FIELD

The present disclosure relates to domain name systems (DNS) and in particular to client computer DNS association to unsafe networks.

### BACKGROUND

The domain name system (DNS) relies on trusting the source of domain name addresses to ensure that that a requested host is resolved to the intended destination. Client computers rely on DNS servers to resolve Universal Resource Locator (URL) to IP addresses and associated resources. DNS servers are typically assumed to be trustworthy, however, with the increase in mobile workers outside of a secure corporate network and the "work from home" transition have resulted in employee devices roaming and accessing unsecure external networks. The unsafe, unknown or unverified networks can take the form of guest networks, such as free Wi-Fi networks provided to at coffee shops, restaurants, hotels, etc. to perform work related tasks. When the client computer connects to a new network, the Dynamic Host Control Protocol (DHCP) assigns an Internet Protocol (IP) address to the device and provides gateway and DNS routing information. The requirement to utilize DHCP opens up the possibility that an assigned DNS is untrustworthy and may be utilized to redirect user data to harmful servers or websites thus opening the possibility of man-in-the-middle attacks. Traditional firewall functionality cannot distinguish between potentially malicious DNS servers as local host IPs are commonly utilized as DNS servers, removing the ability to identify malicious DNS servers based upon IP addresses alone. Virtual private networks (VPNs) can reduce this type of attack, however, maintaining a constant VPN connection is problematic as is safeguarding against user data potentially being exposed before establishing a connection to a VPN is problematic. Therefore, when a roaming user connects to a new network the opportunity to connect to a malicious DNS server is present.

Accordingly, systems and methods that enable improved DNS firewall protection for roaming networked computer devices remains highly desirable.

Document US 2011/191455 A1 describes a DNS security system that collects and uses aggregated DNS information originating from a plurality of client computers to detect anomalous DNS name resolutions. In an embodiment, a server DNS security component is able to glean DNS information from many clients concerning the behavior of various DNS names over time, wherein the server DNS security component learns in what manner DNS names are resolved, to which IP addresses they are resolved, etc.. Further, the security component is able to detect anomalous DNS name resolution patterns, fast changing DNS names, and other irregular activity, and consequently adjudicate instances of the corresponding DNS names as being anomalous.

In document CN 103 634 786 A, a method and a system for the security detection and repair of a wireless network are described.

### BRIEF DESCRIPTION OF THE DRAWINGS

Further features and advantages of the present disclosure will become apparent from the following detailed description, taken in combination with the appended drawings, in which:
FIG. 1 shows a representation of one embodiment of a system including a Roaming DNS Firewall functionality;
FIG. 2 shows one example of a method of operation of endpoint agent operation;
FIG. 3 shows one example of a method of applying secure DNS addresses by the endpoint agent;
FIG. 4 shows one example of a method of DNS override protection by the Roaming DNS Firewall;
FIG. 5 shows one example of a method of an alternative DNS override protection; and
FIG. 6 shows one example of a method of DNS firewall deployment management.

It will be noted that throughout the appended drawings, like features are identified by like reference numerals.

### SUMMARY OF INVENTION

The invention is defined by the appended claims.

The present invention concerns a method of initiating a roaming Domain Name System (DNS) firewall according to claim 1, a mobile computing device according to claim 13, and a non-transitory computer readable memory according to claim 14.

In one embodiment, there is provided a method of initiating a roaming Domain Name System (DNS) firewall on a mobile computing device, the method comprising:
detecting a network connection to a new network on a network interface of the mobile computing device;
characterizing a plurality of network parameters associated with the new network;
receiving a safe network profile based upon the characterization of the plurality of network parameters; and
modifying DNS identifiers associated with the network interface with DNS identifiers from the received safe network profile.

In a further embodiment of the method or methods outlined above, the safe network profile identifies one or more trusted DNS identifiers, the safe network profile is received from a remote management server and the roaming DNS firewall is provided by a security agent executing on the mobile computing device.

In a further embodiment of the method or methods outlined above, the DNS identifier is modified when the characterized plurality of network parameters are determined to be unsafe.

In a further embodiment of the method or methods outlined above, a characterization of a plurality of network parameters are unsafe based upon one or more parameters selected from the group comprising: network type, network name, Wi-Fi BBSID, Primary Domain, Search Domain Entry, Current IPv4 DNS Entry, and current IPv6 DNS entry.

In a further embodiment of the method or methods outlined above, the method or methods further comprise verifying that the DNS identifiers have been successfully modified.

In a further embodiment of the method or methods outlined above, the method or methods further comprise sending a request to a remote server for a safe network profile based upon the characterized plurality of network parameters.

In a further embodiment of the method or methods outlined above, the roaming DNS firewall is provided by an endpoint agent executed on the mobile computing device.

In a further embodiment of the method or methods outlined above, modifying the DNS identifiers further comprises:
building DNS registry values from the safe network profile;
applying the DNS registry value for a network interface card (NIC) Universally Unique Identifier (UUID);
disconnecting from the new network;
shutdown a security agent;
reconnecting the new network;
starting the endpoint agent; and
verifying that the registry DNS values have been maintained.

In a further embodiment of the method or methods outlined above, if the registry DNS values have been changed the method further comprises reporting a failure.

In a further embodiment of the method or methods outlined above, the method or methods further comprise polling the DNS identifiers periodically to determine that the safe DNS identifiers have been maintained.

In a further embodiment of the method or methods outlined above, the method or methods further comprise:
monitoring a registry associated with the plurality of network parameters to identify a parameter change;
receiving a kernel change notification or through polling for changes to specific registry data;
verifying if the kernel change notification is associated with the DNS identifiers; and
logging a DNS override when the kernel change is associated with the DNS identifiers.

In a further embodiment of the method or methods outlined above, the DNS identifiers are associated with a trusted DNS.

In a further embodiment of the method or methods outlined above, the DNS roaming firewall is deactivated on a trusted network.

In a further embodiment of the method or methods outlined above, the plurality of network parameters are received in a Dynamic Host Configuration Protocol (DHCP) message.

In a further embodiment of the method or methods outlined above, modifying DNS identifiers associated with the network interface is defined in an associated registry key.

In yet a further embodiment, there is provided a mobile computing device for executing the roaming Domain Name System (DNS) firewall of any one of the methods outlined herein.

In yet an even further embodiment, there is provided a non-transitory computer readable memory containing instructions which when executed by a processor perform any one of the methods outlined herein.

In an even further embodiment, there is provided a method of providing a roaming DNS firewall management server, the method comprising:
receiving a plurality of network characterization observed by a plurality of endpoint agents executed on respective mobile computing devices;
determining from the plurality of network characterization safe network parameters;
generating a safe network profile from the plurality of network parameters, the safe network profile identifying a trusted DNS identifier; and
sending the safe network profile to a requesting mobile computing device.

### DETAILED DESCRIPTION

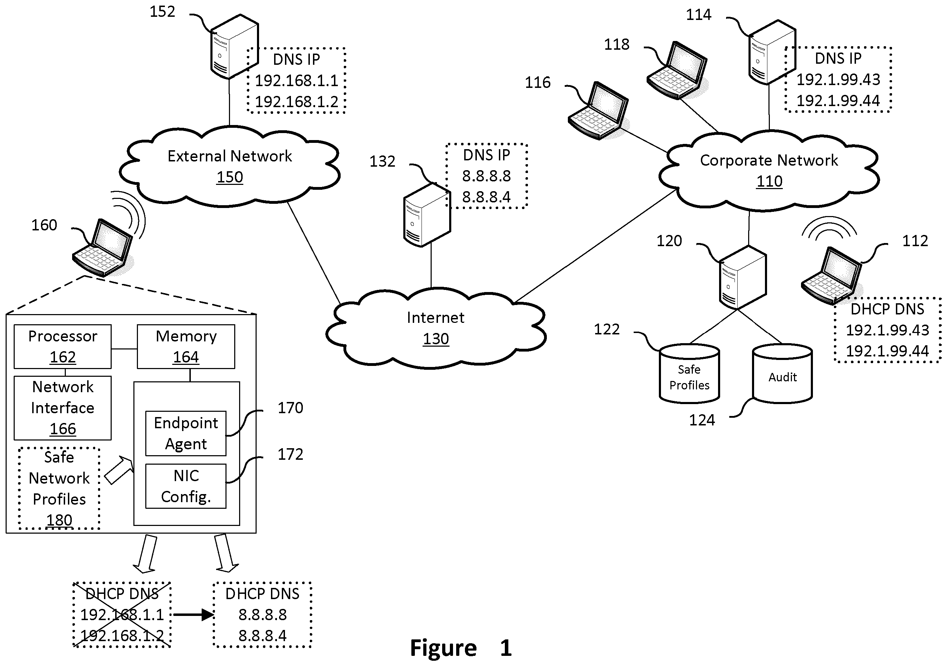

Embodiments are described below, by way of example only, with reference to Figures 1-6. All aspects, embodiments and examples disclosed herein are intended to be non-limiting.

A roaming DNS firewall capability is provided that protects or substantially protects computers when they are connecting to unsafe, unverified or unknown networks. The capability allows operators (or the customer) to define a set of safe networks on which DNS values are considered safe, and a set of DNS information that will be dynamically applied when the host connects to a network that is not in the safe network list.

In accordance with an aspect of the present disclosure there is provided a method of initiating a roaming Domain Name System (DNS) firewall on a mobile computing device, the method comprising: detecting a network connection to a new network on a network interface of the mobile computing device; characterizing a plurality of network parameters associated with the new network; receiving a safe network profile based upon the characterization of the plurality of network parameters; and modifying DNS identifiers associated with the network interface with DNS identifiers from the received safe network profile.

In accordance with yet another aspect of the present disclosure there is provided a mobile computing device for executing the roaming Domain Name System (DNS) firewall of the disclosed method.

In accordance with yet another aspect of the present disclosure there is provided a non-transitory computer readable memory containing instructions which when executed by a processor perform the disclosed methods.

In accordance with another aspect of the present disclosure there is provided a method of providing a roaming DNS firewall management server, the method comprising: receiving a plurality of network characterization observed by a plurality of endpoint agents executed on respective mobile computing devices; determining from the plurality of network characterization safe network parameters; generating a safe network profile from the plurality of network parameters, the safe network profile identifying a trusted DNS identifier; and sending the safe network profile to a requesting mobile computing device.

Figure 1 shows a representation of a system including a Roaming DNS Firewall functionality. In a corporate network 110 environment, computing devices such as computers 112, 116 and 118 can operate in a controlled verified setting utilizing a secure DNS 114 "192.1.99.43 192.1.99.44" to resolve URL identifiers. As computing devices such as computers 160 roam outside of the office environment on external unsafe, unverified or unknown networks 150 the process of obtaining access to the network via Dynamic Host Configuration Protocol (DHCP) enables bad actors to redirect or intercept user traffic by using a malicious or untrusted DNS 152. The computer 160 contains a processor for executing processing functions provided by memory 164. One or more network interfaces (NIC) 166 allow wired or wireless access to networks 150, 110 by configuring the NIC 172 DHCP messages when logging on to the respective network. Endpoint agent functionality 170, executed on the computer 160, enables the monitoring of network connections to provide security features with a managing entity such as a management server 120. The endpoint agent 170 identifies new network connections and characterizes parameters associated with the network connection to determine if the network is safe. The characterization of the network enables the determination of whether the DNS IP 152 "192.168.1.1 192.168.1.2" that is provided to the device 160 is potentially unsafe and should be replaced with a verified safe DNS IP 132 "8.8.8.8 8.8.8.4". The characterization is defined by parameters associated with safe network profiles 180. The safe network profiles are provided by the management server 120, and associated storage 122, and define relative network parameters, network type, network identifiers, location, user type, device type, or application type. The management server 120 can also provide audit 124 logs from the endpoint agents to determine if DNS values are overridden or have failed to be applied. The management server 120 may be hosted within a corporate or customer network or may utilize a distributed or cloud based architecture.

The following examples are cases where the disclosed roaming DNS firewall functionality can provide protection in dynamic professional environments, such as "work from home" distributions or those that travel frequently:
The first scenario involves the "work from home" day-to-day, a customer employee regularly connects their personal laptop to the company VPN using their home Wi-Fi connection. When the employee connects to the company VPN, their laptop will receive internal DNS information, which provides a safe set of DNS information associated with the VPN. However, when the customer employee disconnects from the VPN, the Roaming DNS Firewall immediately turns on. This ensures that the employee's workstation will not fall victim to bad websites or embedded website content that references DNS entries that point to harmful servers.

A second scenario in the "work from home" day-to-day is one where there is not a company VPN. Perhaps the employee goes into the office one day a week with their work laptop, and while they are connected to the office network the network information provides an internal set of DNS information. However, the other 4 days of the week the customer works out of home or coffee shops. When the employee connects to any other network than the office network, the Roaming DNS Firewall will apply an approved set of vetted DNS information, and the employee is now protected.

A third scenario where the Roaming DNS Firewall is extremely helpful is for employees that travel frequently as part of their job. In particular, when in other countries the general safety of the destination internet is largely an unknown. The Roaming DNS Firewall allows customer network administrators to configure an approved set of DNS information that is enabled when the customer is traveling.

In addition to the above scenarios, the Roaming DNS Firewall can be used to various degrees of protection as best suits customer networks and distributed work environments. The Roaming DNS Firewall may also have additional features that improve customer experience and provide additional protection, which are as follows:
Every time the endpoint agent enables/disables the Roaming DNS Firewall for a given host, detailed logs are sent to a security appliance (on-site or cloud-based) which provides a full audit-trail of changes made by the endpoint agent. This auditing capability can facilitate additional levels of customer.

Anti-tamper protection of the Roaming DNS Firewall is also provided by the endpoint agent. This means that if an employee attempts to override Roaming DNS Firewall settings, or a potential cyber threat attempts to do the same, they are immediately blocked and logs can be sent to an internal security appliance or external host.

Unlike existing solutions, the Roaming DNS Firewall is one that does not require the placement of additional network appliances or configuration throughout a customer infrastructure. The mechanism works by allowing operators (or the back-end system via automation) to describe networks that are considered safe networks (Safe Network List), and a set of roaming DNS information (DNS Override) that will be applied when a host is connected to a network that is not in the safe network list. There are two descriptive sets of information with this mechanism, a Safe Network and DNS Override.

### SAFE NETWORK

The first data object that needs to be defined is a safe network. Because there isn't a universal set of information that describes a network, a set of common or unique characteristics needed to be defined that could be used to describe a physical network (LAN or WAN), Wi-Fi network, Cellular data network, Virtual Private Network (VPN), etc. In some cases, such as a wired LAN, the information available is what is provided by the gateway when a device connects to a network, so the characteristics are more what is being presented rather than physical characteristics of the network itself.

Because of this challenge, the way in which networks are defined are by one or more characteristics, which are combined as a data set that describes a safe network entity. All specified fields must match in order to be considered a match, and only one field is mandatory in order to identify a safe network:
**Network Type** - the type of network, such as wired or Wi-Fi or Virtual.
**Network Name** - the network name presented by the operating system, such as the SSID of a Wi-Fi network or "LAN Connection" reported when a network cable is plugged in.
**Wi-Fi BSSID** - the unique MAC address that identifies a Wi-Fi network.
**Primary Domain** - a primary domain string that is associated with the network which is provided upon connection.
**Search Domain Entry(s)** - one or more search domain prefixes associated with the network which is provided upon connection.
**Current IPv4 DNS Entry(s)** - one or more IPv4 DNS entries associated with the network which is provided upon connection.
**Current IPv6 DNS Entry(s)** - one or more IPv6 DNS entries associated with the network which is provided upon connection.

The following is an example set of safe networks that could be defined for a particular customer topology:

### Safe Network #1

This network a customer's main physical network at their main office, includes a managed domain and an internal DNS Server.
Search Domain #1 = "AcmeNet"
IPv4 DNS #1 = 192.1.99.43
IPv4 DNS #2 = 192.1.99.44

### Safe Network #2

This network a Wi-Fi network that is at a customer remote site. The most effective way to identify that Wi-Fi network is by BSSID, although any additional information such as internal DNS could also be helpful to avoid BSSID-spoofing.
Wi-Fi BSSID = 34:29:F3:23:55:25

### DNS Override

The messaging/handling would easily allow also supporting primary domain, search prefixes, IPv4 and IPv6. Therefore, specifying DNS override information is simply specifying one or more IPv4 DNS values. For example, the following IPv4 DNS values could be used (which are Google's IPv4 DNS values)
DNS 1 = 8.8.8.8
DNS 2 = 8.8.4.4

In regard to what those DNS values actually are, this is an operations decision. This could be, for example, a proxy to process look-ups and route them to DNS security authority in the local region for validation.

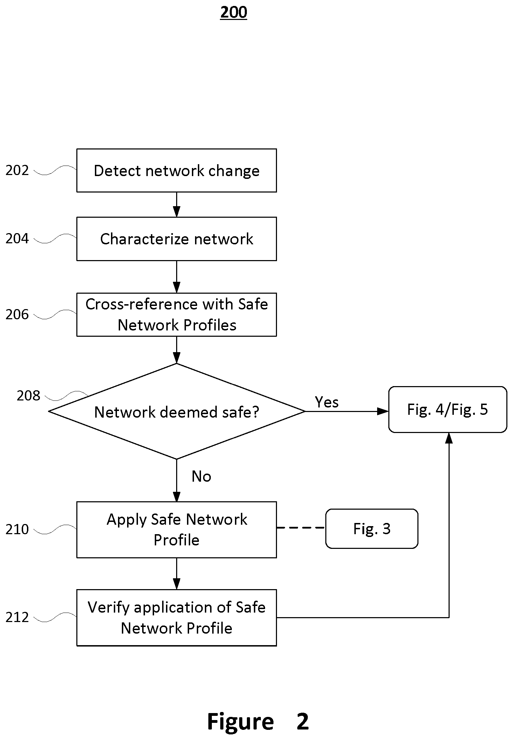

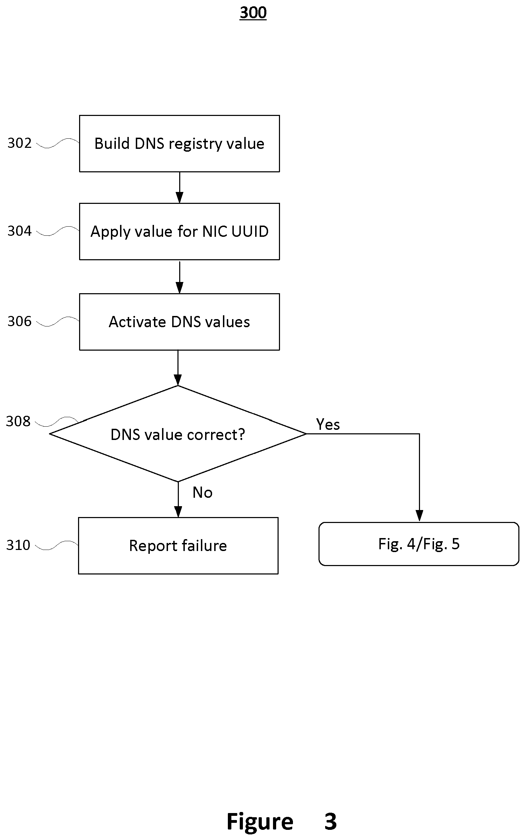

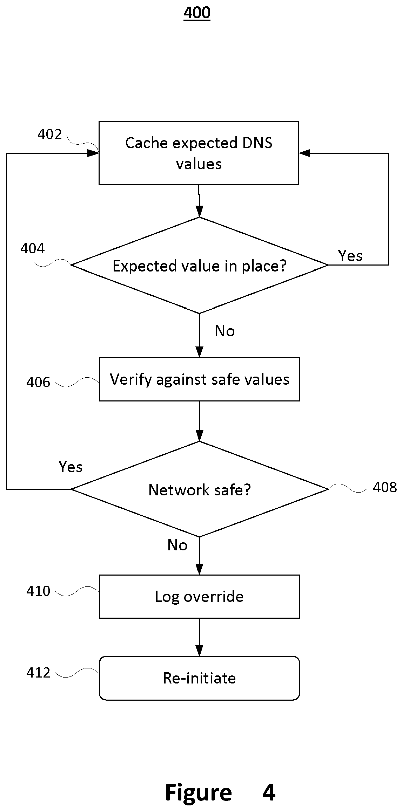

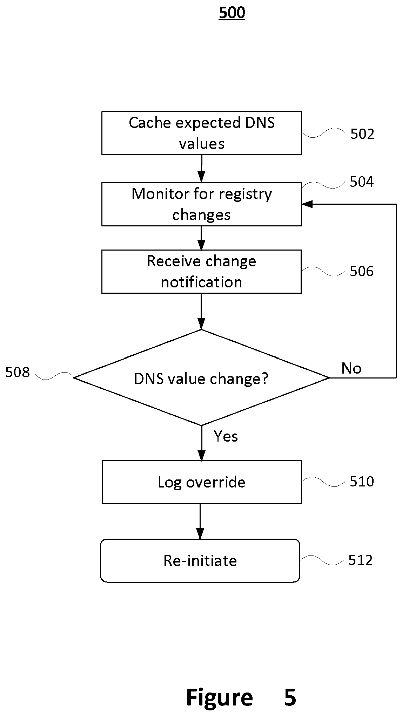

FIG. 2 shows a method 200 of operation of endpoint agent operation such as provided in, for example, a Windows^{™} operating environment. The Roaming DNS Firewall functions by detecting connections to networks (202) that do not match any of the defined safe networks in comparison to the received safe network profile by characterizing the network (204) and cross-referencing against received safe network profiles (206). The safe network profiles can be updated and received at any time. If the network is deemed safe (Yes at 208) the connection is monitored for any changes as per, for example, the methods in Figure 4 and Figure 5. If the network is not deemed safe (No at 208), the DNS settings on the Network Interface Card (NIC) are applied that is facilitating the "unsafe" network connection, which may be applied as per, for example, the method of Figure 3. The application of the profile is verified (212) to ensure the correct values are in force and then monitored for possible override events as per, for example, Figure 4 and Figure 5.

Microsoft Windows utilizes a registry data to store IPv4 DNS information on a per-NIC basis at the following location:
\HKLM\SYSTEM\CurrentControlSet\Services\Tcpip\Parameters\Interfaces\

Each NIC is identified by Universally Unique Identifier (UUID) subkey, which is present regardless of whether the NIC represents a physical network card or virtual network adapter. Information unique to each NIC is stored as registry values within that subkey, including two registry values that contain DNS information. These values may or may not exist; their presence is entirely dictated by the DNS configuration for the NIC. These values of type REG_SZ are as follows:
\HKLM\SYSTEM\CurrentControlSet\Services\Tcpip6\Parameters\Interfaces\[NIC-UUID**]\NameServer** - static DNS (manually configured)
\HKLM\SYSTEM\CurrentControlSet\Services\Tcpip6\Parameters\Interfaces\[NIC-UUID**]\DhcpNameServer** - dynamic DNS (via DHCP)

The contents of each registry value is a string containing a space-separated list of IPv4 DNS values, an example as follows:
"8.8.8.8 8.8.4.4"

With reference to Figure 3, the method 300 to change the DNS configuration on a per NIC basis, the following steps are performed by the endpoint agent (which is also what is executed to restore the original DNS information when required). A new string of space-separated DNS values are built (302). The appropriate registry value for the NIC is changed (304), depending on whether static DNS is being used (NameServer value) or dynamic DNS assigned via DHCP is being used (DhcpNameServer). The DNS values are activated (306) by forcing the new DNS settings to be active (restores active DNS information from what is in the registry): "ipconfig /flushdns".

Once per-NIC DNS information has been modified, the agent ensures the restoration of original values in the following cases:
The host is disconnected from the unsafe network for which the associated NIC had the DNS information overridden.

The agent shuts down (for an upgrade, uninstall or general host shut-down)

The agent starts-up and recognizes that a previous DNS override was not reverted to its original value, which could happen if the agent or host had unexpectedly crashed.

If the DNS values are correct (Yes at 308) override protection can be performed as per, for example, Figure 4 and Figure 5 which will be further described. If the value are not correct (No at 308) the failure can be reported to the management system (310) and additional remediation actions can be performed.

The equivalent IPv6 information can be found at the following registry key (and subsequent per-NIC keys and values).
\HKLM\SYSTEM\CurrentControlSet\Services\Tcpip6\Parameters\lnterfaces\[NIC-UUID]

It should be noted that there is also IPv4 DNS information found at a higher level as follows:
\HKLM\SYSTEM\CurrentControlSet\Services\Tcpip\Parameters

DNS overrides are implemented on a per-network basis, not for the entire host. This ultimately allows the routing table to function as expected, while supporting multiple networks being simultaneously connected. This has important implications in regard to shared physical connections that utilize VPNs, and potentially gateway hosts (although DNS queries on gateways would be quite complicated if the expectation is that multiple networks are providing DNS).

### DNS Override Protection

Registry keys that govern per-NIC DNS can be changed as part of regular Windows operating system tasks, but they may also potentially change in a malicious way if malware wishes to thwart the regular DNS server. For example, NICs configured to use DHCP will have their lease expire as configured by the DHCP provider, which is typically every 30 days. When a renewal occurs, the host receives a full set of DHCP and DNS information (typical configuration), resulting in the DNS registry values being reset to their original value. If this happened when the Roaming DNS Firewall was active, it would result in the Roaming DNS Firewall being disabled.

For this reason, a protection mechanism was required to ensure that if the registry values are modified that the override values are put back in place. Because Windows does not have a mechanism to block access to specific registry keys/values from user mode, or a notification mechanism to monitor specific registry keys/values and be told in the same callback context what actually was changed, two potential approaches are possible. Figure 4 shows a method 400 of DNS override protection. The expected values (i.e. the override DNS information) are cached (402) and periodically verified that the values are still in place (404), such as once per second, by polling for changes to specific registry data. If the expected DNS values are present (Yes at 404) the monitor polling process continues. If the expected values are not in place (No at 404) the values are identified against known safe values (406). If the identified network is safe (Yes at 408) the monitor polling process continues, however if the values are not safe (No at 408) the override event is logged (410) and provided to the management system and the values are replaced with the changed values with the expected baseline. The roaming DNS firewall can then be reinitiated (412) to apply safe DNS values.

Figure 5 shows an alternative method 500 of DNS override protection. The expected values (i.e. the override DNS information) are cached (502). The system server process **NtNotifyChangeKey** is utilized to monitor all registry value activity (recursively) under the registry (504):
key \HKLM\SYSTEM\CurrentControlSet\Services\Tcpip\Parameters\Interfaces.

While this mechanism still requires a thread to provide an alert-able "landing pad" for notifications generated by the kernel (506), it avoids the polling processing hit. While additional notifications will be received for keys/values that are not of interest, the advantage of not having to poll makes ignoring non-interesting callbacks an acceptable trade-off. When the notification callback triggers, the registry values are verified (508) that have been changed match the expected baseline. If the DNS value has not changed (No at 508) monitoring continues (504) by registering the callback to receive further notifications. If the DNS value has changed (Yes at 508) they are replaced with the changed values with the expected baseline and the override event is logged (510) and provided to the management system. The roaming DNS firewall can then be reinitiated (512) to apply safe DNS values.

In a Windows^{™} implementation a kernel-only change notification API CmRegisterCallback / CmRegisterCallbackEx may be utilized. Alternatively, NtNotifyChangeKey can be used in both User Mode and Kernel Mode or manual polling may be utilized.

### DNS OVERRIDE LOGGING

A logging mechanism can be implemented to give operators visibility over when this mechanism takes an action related to host DNS as described, for example, in Figures 4 and 5. There are three types of logs:
**DNS Override** - this log indicates that the agent has detected that the host connected to an unsafe network and has opted to override the DNS for that network connection.
**DNS Restore** - this log indicates that the agent has opted to restore the original DNS information for a network connection, which can occur of a network disconnects, the agent shuts down or the agent is starting and cleaning up DNS state (perhaps caused by an agent or host crash).
**DNS Protection** - this log indicates that the agent has detected an unexpected external change to DNS information that was placed as an override, and that it restored the override value. This could happen if malware on the host attempts to make a change, or when a DHCP lease is restored (such as with **"ipconfig /renew"** command).

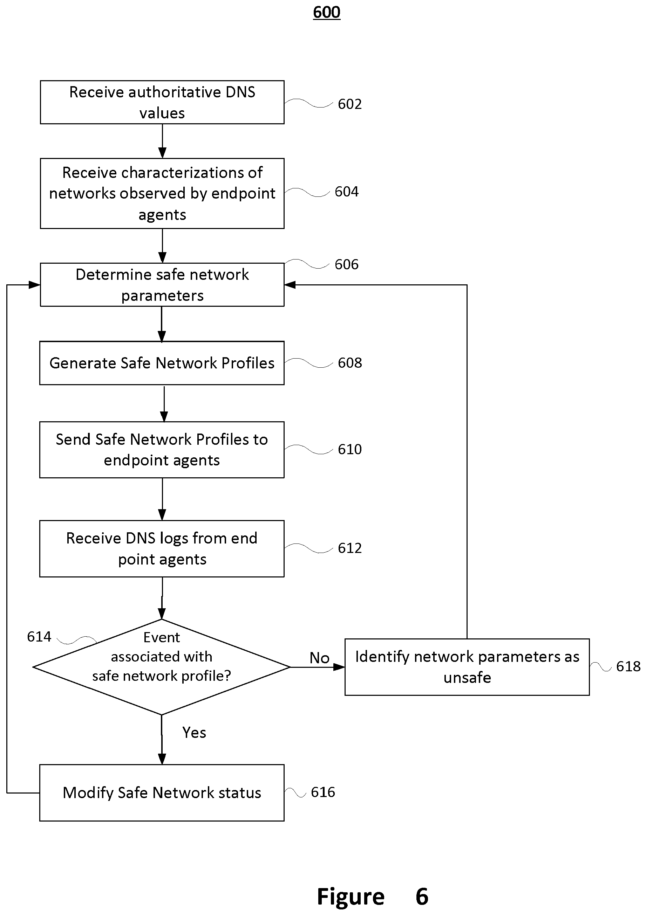

FIG. 6 shows a method 600 of DNS firewall deployment management. The management system server can be hosted by an organization or be provided by a distributed cloud computing environment. Some of the functions may be configured or implemented dependent on the configuration profiles of the system associated with the organization. If an external authoritative DNS is not defined for a profile, the management server can request a trusted DNS from a DNS security authority in the local region for validation (602). To characterize safe networks Endpoint Agents surveys can be fed into a an analytic system that describes the common set of networks and network parameters that are currently observed by the endpoint agents (604). For example, if a 1000 endpoint agents deployed on a customer network (physical or virtual) indicate that two common networks are being used (perhaps during regular working hours), then a conclusion could be drawn that those two networks (perhaps identified by existing DNS information) represent the safe networks associated with the organization - a customer management interface can be used to request verification of these conclusions by the customer IT team. While creating this initial set would likely not be overly challenging, maintaining the accuracy of that safe network list in the context of customer network changes would require additional operational diligence and supporting automated mechanisms. From the surveyed networks safe parameters can be determined (606) based upon common or known features. Alternatively, networks could be manually described by exposing their internal DNS information as the safe network match criteria. Once provided, the management server could utilize endpoint agents to verify that they have seen one or more of the safe networks as described. This would allow verification that a large percentage of hosts (if not all) fit into the safe network classification as provided.

Safe network profiles defining verified DNS that are to be used on unsafe networks can then be generated (608) and sent to the Endpoint Agents as required (610). As the Endpoint Agents operate DNS logs can be received identifying additional network profiles parameters, network overrides and execution errors (612). If the events are associated with a previously defined safe network profile (Yes at 614) the network profile status can be modified (616) or device specific software issues such as possible malware can be identified. If the event is not associated with a safe network (No at 614) the associated parameters can be identified (618) and utilized in determine additional safe network parameters (606) of the safe network profiles.

Each element in the embodiments of the present disclosure may be implemented as hardware, software/program, or any combination thereof. Software codes, either in its entirety or a part thereof, may be stored in a computer readable medium or memory (e.g., as a ROM, for example a non-volatile memory such as flash memory, CD ROM, DVD ROM, Blu-ray^{™}, a semiconductor ROM, USB, or a magnetic recording medium, for example a hard disk). The program may be in the form of source code, object code, a code intermediate source and object code such as partially compiled form, or in any other form.

It would be appreciated by one of ordinary skill in the art that the system and components shown in Figures 1-6 may include components not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

## Claims

1. A method of initiating a roaming Domain Name System, DNS, firewall on a mobile computing device (160), the method comprising:
detecting a network connection to a new network (150) on a network interface (166) of the mobile computing device (160);
characterizing a plurality of network parameters associated with the new network (150) using an endpoint agent (170) such that the endpoint agent (170) identifies new network connections and characterizes parameters associated with the network connection to determine if the new network (150) is safe;
receiving a safe network profile (180) provided by a remote management server (120); and
modifying DNS identifiers associated with the network interface (166) with DNS identifiers from the received safe network profile (180), wherein the DNS identifiers are modified when the characterized plurality of network parameters are determined to be unsafe,
wherein a characterization of the plurality of network parameters is based on one or more parameters selected from the group comprising: network type, network name, Wi-Fi BBSID, Primary Domain, Search Domain Entry, Current IPv4 DNS Entry, and current IPv6 DNS entry.

2. The method of claim 1,
wherein the safe network profile (180) identifies one or more trusted DNS identifiers, and the roaming DNS firewall is provided by a security agent executing on the mobile computing device (160).

3. The method of any one of claims 1 to 2, further comprising verifying that the DNS identifiers have been successfully modified.

4. The method of any one of claims 1 to 3, further comprising sending a request to a remote server for a safe network profile (180) based upon the characterizing of the plurality of network parameters.

5. The method of any one of claims 1 to 4, wherein the roaming DNS firewall is provided by the endpoint agent (170) executed on the mobile computing device (160).

6. The method of any one of claims 1 to 5, wherein modifying the DNS identifiers further comprises:
building DNS registry values from the safe network profile (180);
applying the DNS registry value for a network interface card, NIC, Universally Unique Identifier, UUID;
disconnecting from the new network (150);
shutting down a security agent;
reconnecting the new network (150);
starting the endpoint agent (170); and
verifying that the registry DNS values have been maintained; and
optionally, if the registry DNS values have been changed, reporting a failure.

7. The method of any one of claims 1 to 6, further comprising polling the DNS identifiers periodically to determine that the safe DNS identifiers have been maintained.

8. The method of any one of claims 1 to 7, further comprising:
monitoring a registry associated with the plurality of network parameters to identify a parameter change;
receiving a kernel change notification or through polling for changes to specific registry data;
verifying if the kernel change notification is associated with the DNS identifiers; and
logging a DNS override when the kernel change is associated with the DNS identifiers.

9. The method of any one of claims 1 to 8, wherein the DNS identifiers are associated with a trusted DNS.

10. The method of any one of claims 1 to 9, wherein the DNS roaming firewall is deactivated on a trusted network.

11. The method of any one of claims 1 to 10, wherein the plurality of network parameters are received in a Dynamic Host Configuration Protocol, DHCP, message.

12. The method of any one of claims 1 to 11, wherein modifying DNS identifiers associated with the network interface (166) is defined in an associated registry key.

13. A mobile computing device (160) for executing the roaming Domain Name System, DNS, firewall initiating method of any one of claims 1 to 12.

14. A non-transitory computer readable memory containing instructions which when executed by a processor perform the method of any one of claims 1 to 12.

## Patentansprüche

1. Verfahren zum Initiieren einer Roaming Domain Name System, DNS, Firewall auf einem mobilen Computergerät (160), wobei das Verfahren umfasst:
Erfassen einer Netzwerkverbindung zu einem neuen Netzwerk (150) an einer Netzwerkschnittstelle (166) des mobilen Computergeräts (160);
Charakterisieren mehrerer dem neuen Netzwerk (150) zugeordneter Netzwerkparameter unter Verwendung eines Endpunktagenten (170), so dass der Endpunktagent (170) neue Netzwerkverbindungen identifiziert und Parameter charakterisiert, die der Netzwerkverbindung zugeordnet sind, um zu bestimmen, ob das neue Netzwerk (150) sicher ist;
Empfangen eines von einem Fernverwaltungsserver (120) bereitgestellten sicheren Netzwerkprofils (180); und
Modifizieren von DNS-Kennungen, die der Netzwerkschnittstelle (166) zugeordnet sind, mit DNS-Kennungen aus dem empfangenen sicheren Netzwerkprofil (180), wobei die DNS-Kennungen modifiziert werden, wenn bestimmt wird, dass die charakterisierten mehreren Netzwerkparameter unsicher sind,
wobei eine Charakterisierung der mehreren Netzwerkparameter auf einem oder mehreren Parametern basiert, die aus der Gruppe ausgewählt sind, die Folgendes umfasst: Netzwerktyp, Netzwerkname, WLAN BBSID, primäre Domäne, Suchdomäneneintrag, aktueller IPv4-DNS-Eintrag und aktueller IPv6-DNS-Eintrag.

2. Verfahren nach Anspruch 1,
wobei das sichere Netzwerkprofil (180) eine oder mehrere vertrauenswürdige DNS-Kennungen identifiziert und die Roaming DNS Firewall durch einen Sicherheits-Agent bereitgestellt wird, der auf dem mobilen Computergerät (160) ausgeführt wird.

3. Verfahren nach einem der Ansprüche 1 bis 2, ferner umfassend Verifizieren, dass die DNS-Kennungen erfolgreich modifiziert worden sind.

4. Verfahren nach einem der Ansprüche 1 bis 3, ferner umfassend Senden einer Anfrage an einen entfernten Server für ein sicheres Netzwerkprofil (180) basierend auf dem Charakterisieren der mehreren Netzwerkparameter.

5. Verfahren nach einem der Ansprüche 1 bis 4, wobei die Roaming DNS Firewall von dem Endpunktagenten (170) bereitgestellt wird, der auf dem mobilen Computergerät (160) ausgeführt wird.

6. Verfahren nach einem der Ansprüche 1 bis 5, wobei das Modifizieren der DNS-Kennungen ferner umfasst:
Erstellen von DNS-Registerwerten aus dem sicheren Netzwerkprofil (180);
Anwenden des DNS-Registerwerts für einen Netzwerkschnittstellenkarten-, NIC-, Universal Unique Identifier, UUID;
Trennen von dem neuen Netzwerk (150);
Abschalten eines Sicherheits-Agenten;
Wiederverbinden des neuen Netzwerks (150);
Starten des Endpunktagenten (170); und
Verifizieren, dass die Register-DNS-Werte beibehalten wurden; und
optional, wenn die Register-DNS-Werte geändert worden sind, Melden eines Fehlers.

7. Verfahren nach einem der Ansprüche 1 bis 6, ferner umfassend periodisches Abfragen der DNS-Kennungen, um zu bestimmen, dass die sicheren DNS-Kennungen beibehalten wurden.

8. Verfahren nach einem der Ansprüche 1 bis 7, ferner umfassend:
Überwachen einer Registrierungsdatenbank, die den mehreren Netzwerkparametern zugeordnet ist, um eine Parameteränderung zu identifizieren;
Empfangen einer Benachrichtigung über eine Kerneländerung oder durch Abfragen von Änderungen an bestimmten Registerdaten;
Verifizieren, ob die Benachrichtigung über die Kerneländerung den DNS-Kennungen zugeordnet ist; und
Protokollieren eines DNS-Eingriffs, wenn die Kerneländerung den DNS-Kennungen zugeordnet ist.

9. Verfahren nach einem der Ansprüche 1 bis 8, wobei die DNS-Kennungen einem vertrauenswürdigen DNS zugeordnet sind.

10. Verfahren nach einem der Ansprüche 1 bis 9, wobei die DNS Roaming Firewall in einem vertrauenswürdigen Netzwerk deaktiviert ist.

11. Verfahren nach einem der Ansprüche 1 bis 10, wobei die mehreren Netzwerkparameter in einer Dynamic Host Configuration Protocol, DHCP, Nachricht empfangen werden.

12. Verfahren nach einem der Ansprüche 1 bis 11, wobei das Modifizieren von DNS-Kennungen, die der Netzwerkschnittstelle (166) zugeordnet sind, in einem zugeordneten Registrierungsschlüssel definiert ist.

13. Mobiles Computergerät (160) zum Ausführen des die Roaming Domain Name System, DNS, Firewall initiierenden Verfahrens nach einem der Ansprüche 1 bis 12.

14. Nichttransitorischer computerlesbarer Speicher, der Anweisungen enthält, die, wenn sie von einem Prozessor ausgeführt werden, das Verfahren nach einem der Ansprüche 1 bis 12 durchführen.

## Revendications

1. Procédé de mise en place d'un pare-feu d'itinérance de système de nom de domaine, DNS, sur un dispositif informatique mobile (160), le procédé comprenant :
la détection d'une connexion réseau à un nouveau réseau (150) sur une interface réseau (166) du dispositif informatique mobile (160) ;
la caractérisation d'une pluralité de paramètres réseau associés au nouveau réseau (150) à l'aide d'un agent de point d'extrémité (170), de telle sorte que l'agent de point d'extrémité (170) identifie les nouvelles connexions réseau et caractérise les paramètres associés à la connexion réseau afin de déterminer si le nouveau réseau (150) est sûr ;
la réception d'un profil réseau sûr (180) fourni par un serveur de gestion distant (120) ; et
la modification des identifiants DNS associés à l'interface réseau (166) à l'aide des identifiants DNS du profil réseau sûr (180) reçu, dans laquelle les identifiants DNS sont modifiés lorsque la pluralité de paramètres réseau caractérisés sont déterminés comme étant dangereux ;
dans lequel une caractérisation de la pluralité de paramètres réseau est basée sur un ou plusieurs paramètres choisis dans le groupe comprenant : le type de réseau, le nom du réseau, le SSID Wi-Fi, le domaine principal, l'entrée de domaine de recherche, l'entrée DNS IPv4 actuelle et l'entrée DNS IPv6 actuelle.

2. Procédé selon la revendication 1,
dans lequel le profil réseau sûr (180) identifie un ou plusieurs identifiants DNS fiables, et le pare-feu d'itinérance DNS est fourni par un agent de sécurité exécuté sur le dispositif informatique mobile (160).

3. Procédé selon l'une quelconque des revendications 1 à 2, comprenant en outre la vérification que les identifiants DNS ont été modifiés avec succès.

4. Procédé selon l'une quelconque des revendications 1 à 3, comprenant en outre l'envoi d'une requête à un serveur distant pour obtenir un profil réseau sûr (180) en fonction de la caractérisation de la pluralité de paramètres réseau.

5. Procédé selon l'une quelconque des revendications 1 à 4, dans lequel le pare-feu d'itinérance DNS est fourni par l'agent de point d'extrémité (170) exécuté sur le dispositif informatique mobile (160).

6. Procédé selon l'une quelconque des revendications 1 à 5, dans lequel la modification des identifiants DNS comprend en outre :
la création de valeurs de registre DNS à partir du profil réseau sûr (180) ;
l'application de la valeur de registre DNS pour un identifiant universel unique, UUID, de carte d'interface réseau, NIC ;
la déconnexion du nouveau réseau (150) ;
l'arrêt d'un agent de sécurité ;
la reconnexion au nouveau réseau (150) ;
le démarrage de l'agent de point d'extrémité (170) ; et
la vérification que les valeurs DNS du registre ont été conservées ;
optionnellement, si les valeurs DNS du registre ont été modifiées, la notification d'un échec.

7. Procédé selon l'une quelconque des revendications 1 à 6, comprenant en outre la scrutation périodique des identifiants DNS afin de déterminer que les identifiants DNS sûrs ont été conservés.

8. Procédé selon l'une quelconque des revendications 1 à 7, comprenant en outre :
la surveillance d'un registre associé à la pluralité de paramètres réseau pour identifier un changement de paramètre ;
la réception d'une notification de modification du noyau ou par sondage pour les modifications apportées à des données de registre spécifiques ;
la vérification si la notification de modification du noyau est associée aux identifiants DNS ; et
la journalisation d'un contournement de DNS lorsque la modification du noyau est associée aux identifiants DNS.

9. Procédé selon l'une quelconque des revendications 1 à 8, dans lequel les identifiants DNS sont associés à un DNS fiable.

10. Procédé selon l'une quelconque des revendications 1 à 9, dans lequel le pare-feu d'itinérance de DNS est désactivé sur un réseau fiable.

11. Procédé selon l'une quelconque des revendications 1 à 10, dans lequel la pluralité de paramètres réseau sont reçus dans un message de protocole de configuration dynamique d'hôte, DHCP.

12. Procédé selon l'une quelconque des revendications 1 à 11, dans lequel la modification des identifiants DNS associés à l'interface réseau (166) est définie dans une clé de registre associée.

13. Dispositif informatique mobile (160) pour exécuter le procédé de mise en place d'un pare-feu d'itinérance de système de nom de domaine, DNS, selon l'une quelconque des revendications 1 à 12.

14. Mémoire non transitoire lisible par ordinateur contenant des instructions qui, lorsqu'elles sont exécutées par un processeur, mettent en œuvre le procédé selon l'une quelconque des revendications 1 à 12.
